(19) Europäisches Patentamt
European Patent Office
Office européen des brevets

(11) **EP 3 200 614 B1**

(12) **EUROPEAN PATENT SPECIFICATION**

(45) Date of publication and mention of the grant of the patent:
**07.03.2018 Bulletin 2018/10**

(21) Application number: **15757522.6**

(22) Date of filing: **08.09.2015**

(51) Int Cl.:
*A23L 23/10* (2016.01)    *A23L 29/281* (2016.01)

(86) International application number:
**PCT/EP2015/070448**

(87) International publication number:
**WO 2016/050456 (07.04.2016 Gazette 2016/14)**

(54) **FOOD CONCENTRATE**

**LEBENSMITTELKONZENTRAT**

**CONCENTRÉ ALIMENTAIRE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014 EP 14187056**

(43) Date of publication of application:
**09.08.2017 Bulletin 2017/32**

(73) Proprietors:
• **Unilever NV**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **INOUE, Chiharu**
**NL-3133 AT Vlaardingen (NL)**
• **KOPPERT, Remco Johannes**
**NL-3133 AT Vlaardingen (NL)**
• **LEMMERS, Marc**
**NL-3133 AT Vlaardingen (NL)**
• **MELLEMA, Michel**
**NL-3133 AT Vlaardingen (NL)**

(74) Representative: **Tjon, Hon Kong Guno**
**Unilever N.V.**
**Unilever Patent Group**
**Olivier van Noortlaan 120**
**3133 AT  Vlaardingen (NL)**

(56) References cited:
**WO-A1-2012/097930    WO-A1-2012/136454**
**US-A1- 2012 276 271    US-A1- 2013 280 405**

**Description**

**Field of the invention**

The present invention is in the field of concentrated food compositions. It further relates to a process to prepare the same. It further relates to the use of said food composition for preparing a bouillon, a soup, a sauce, gravy or a seasoned dish.

**Background of the invention**

High-salt concentrate food compositions which after dilution in water or a dish result in a bouillon, a soup, a sauce, a gravy or a seasoned dish have been described. This class of products is known to the consumer as well as to the skilled person for many decades. They are known for example in the form of dry bouillon cubes or soup cubes or seasoning cubes. Concentrated products can be dry (e.g. dehydrated), liquid, semiliquid or paste-like products which, after the addition to water according to the directions for use, yield ready to eat preparations.

Recently, savoury concentrate food compositions became available which are in the form of a semi-solid or gel (WO 2012/136454 and US2013/280405). Compared to traditional dry concentrates like bouillon cubes, these gelled concentrates can contain more water and are considered to have a more fresh appearance. Consumers like that a product "sets back" once pressed, showing elasticity, like a gel. This is often associated with fresh food of high quality (e.g. fresh fish, liver, meat), whereas a hard or pasty texture may be associated with non-fresh products that might have dried out.

Gelled savoury concentrates usually contain relatively high amounts of water and salt. The salt is added for taste reasons, but contributes as well to the microbiological stability of the gelled savoury concentrate. Compared to liquid concentrates, the gelled concentrates show the advantage that they are semi-solid, and sufficiently firm (also referred to in the art as self-sustaining, shape stable, soft-solid or semi-solid), and not too sticky and therefore can be unit dosed, like a traditional bouillon cube.

Gelled savoury concentrates rely on the presence of a gelling agent for their firm, semi-solid, gelled texture. A gelling agent may comprise one or more gelling and/or thickening agents which on their own or together provide the firm semi-solid gel texture. For the application in high-salt food concentrates, the gelling agent should be compatible with high-salt levels. Most gelling agents that can form semi-solid gelled, ready to eat (low-salt levels) food products, appeared not compatible with the relatively high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

To achieve a gel structure using gelling agents that show sensitivity to high-salt conditions, the easiest solution would be to increase the gelling agent concentration. However, as a consequence of an increased gelling agent concentration other issues may appear. For some gelling agents, increasing their concentration to allow incorporation of creamy ingredients would cause processing problems due to a too high viscosity during processing. Also when the price of the gelling raw material is high, an increase of gelling agent concentration to sufficient level to counteract high-salt sensitivity or to incorporate creamy ingredients may lead to unaffordable recipe costs.

In WO2007/068483 and WO2007/068402, bouillon and seasoning products comprising gelatine and starch are disclosed. However, the combination of starch and gelatine usually leads to gels that are relatively sticky. There is a need in the art to provide a gelled food concentrate in a mono-dose format that is easy to remove from its packaging. Also, the presence of starch reduced processability (pumpability) in the factory, because of high viscosity obtained at high temperature. Finally, starch gels can be less elastic, hence have reduced 'set back' behaviour upon pressing.

WO2007/068484 discloses a gelled savoury concentrate comprising a gelling agent which contains a mixture of xanthan gum and locust bean gum. EP2468110 discloses a food composition comprising low-methoxy pectin. WO2012/062919 discloses a composition in the form of a gel comprising iota-carrageenan and xanthan gum. US2012/276271 discloses a packaged gelled savoury food concentrate comprising a gelling system and a liquid phase comprising a liquid polyol.

Despite the development of gelled concentrate food compositions which could be produced with the required high-salt level, it was experienced that these savoury concentrate food compositions show several disadvantages.

Present day consumers prefer natural ingredients in food products, especially ingredients that they are familiar with. One of the most common gelling agents available in concentrated foods is gelatine. Home made stock, prepared from animal bones or carcasses contains gelatine and when cooled down has a gel like appearance. Nevertheless, gelatine used as single gelling agent, does not provide the required gelling in the presence of the high salt content needed for a savoury concentrate, unless very high concentrations of gelatine are used. It is therefore preferred to use a relatively low amount of gelatine, for cost reasons, but also to be able to incorporate more other ingredients, such as taste imparting ingredients, into the composition.

Gelatin has a lower gelling and melting temperature than other gelling agents. The use of gelatine as single gelling agent therefore has several benefits. It allows for a simplified processing of the gelled food concentrates, because lower temperatures are required to liquefy the product mix to be able to pump and fill the product. This has benefits for product quality, less heat impact, as well as for the total energy needed for production. Hence the use of gelatine as gelling agents has product quality, costs and sustainability benefits.

Another benefit of using gelatine as gelling agent is in the user application. Besides being more natural than many other gelling agents, the lower melting temperature implies fast dissolution of the gel into hot water. Moreover, the rate-limiting step in the disintegration of a gelatine gel is melting, and to a lesser extent dissolving. This also means that adding water is not crucial to its disintegration functionality, and it enables the use of the savoury food concentrate as seasoning in low water containing sauces, or even in a dry application, for example stirring the food concentrate through a risotto dish.

US 5780090 relates to food concentrates, in the form of traditional bouillon and seasoning cubes, comprising tripeptides containing hydrophobic amino acids for obtaining a savoury flavour or an umami flavour.

WO 2012/097930 relates to food concentrates in the form of gels, comprising an effective amount of gelling agent, including gelatine, salt, water, a liquid polyol and non-gelatinized starch. However, a food concentrate comprising high salt ($\geq$ 19wt% based on water) remains to be desired.

Similarly, WO 02/089608 describes the process to prepare a storage stable brown stock, containing meat extract, gelatine, vegetable juice concentrates and soup stock. However, a gelled food concentrate remains to be desired.

It is therefore an object of the present invention to provide high salt structured food concentrates, based on gelatine, typically in the form of a gelled food concentrate.

It is therefore an object of the present invention to provide high salt structured food concentrates, based on gelatine, using low amounts of gelatine.

It is another object of the present invention to provide a shape-stable, low-sticky, gelled food concentrate.

It is another object of the present invention to provide lower temperature processing of a gelled food concentrate.

It is another object of the present invention to provide a natural gel system.

It is another object of the present invention to provide a gelled food concentrate that at the same time can be quickly dissolved in hot water and molten in applications without water.

Surprisingly it is found that at high salt concentrations type A gelatine gels can be obtained at gelatine concentrations that would otherwise lead to gel-liquid phase separation by the addition of certain amino acids.

## Summary of the invention

Accordingly in a first aspect the invention provides a gelled food concentrate comprising 20-80% by weight of water; an effective amount of gelatine wherein the amount of gelatine is effective when the value for [GE] in the formula below is in the range of 3.5 - 15% by weight on water, where [GE] is defined as:

$$[GE] = \frac{[gelatine] \cdot \sqrt{B_2}}{\sqrt{250}},$$

wherein [gelatine] is the (total) concentration of gelatine in the food concentrate by weight based on water and $B_2$ is the (average) bloom strength of the gelatine in the food concentrate; 19% to 23% by weight of salt based on water;

and 0.4% to 9% by weight based on water of total amino acids [AA-total], defined as amino acids or derivatives or combinations thereof, dissolved in water, wherein the total amino acid concentration [AA-total] is defined as [AA-total] = [arginine] + [histidine] + ½*[valine] + ½*[isoleucine] + ½*[creatine] + [carnosine]; and wherein the combined value for [GE] and [AA-total] is more than or equal to 6; and wherein the gelatine is type A gelatine, preferably of pork origin.

In a second aspect the invention provides a process for preparing a packaged gelled food concentrate, comprising the steps of preparing a mixture comprising water, gelatine, and a premix of dry ingredients except salt, stirring the mixture to homogenize under heating to 40-80°C until the gelatine is dissolved, adding salt to the mixture, under continued stirring, allow setting of the mixture.

In a third aspect the invention provides the use of the gelled food concentrate according to the invention, in the preparation of a bouillon, a soup, a sauce, gravy or a seasoned dish.

The product is gelled food concentrate. By gelled food concentrate is meant a product that can be taken out of its packaging in one single piece. That is, the structured food concentrate should show some coherence, or elasticity, when removed from the packaging.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

Accordingly, the invention provides a food concentrate comprising water, gelatine, salt and amino acids, or their direct derivatives.

Without wishing to be bound by theory, it is thought that, when gelatine is used as single gelling agent, improved structuring or gelling is achieved, at low gelatine concentrations and despite high salt levels, by the additional presence of an amino acid, or combinations of amino acids.

Moreover, the presence of amino acids may improve the appearance of the food concentrate, for example by decreasing the turbidity, or increasing the transparency, or improving the dissolution of the final product.

The person of average skill in the art of food products recognizes a gel when he or she sees one. The appearance of a gel generally can be achieved in an aqueous environment when sufficient gelling agents are used in the formulation.

A gel will usually have a smooth surface appearance, may be shape-retaining at ambient temperature when exposed to gravity, but easily deformable (to some degree in an elastic way). The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. Thus the ratio of G':G" is greater than 1 for a gel. For the given product, a ratio of greater than 1 is suitable.

Without wishing to be bound by a theory, G' defines the degree to which a material responds in an elastic way to the applied deformation; this is effectively an energy storage modulus, defining the amount of energy absorbed and stored by the material, compared to the amount of energy applied to the material.

Without wishing to be bound by a theory, G" defines the degree to which a material responds in a viscous way to the applied deformation. G" can thus be seen as an energy loss modulus, defining the dissipation of energy upon the applied deformation of the material.

Thus, gels are viscoelastic materials that can behave fluid-like as well as solid-like, depending on the timescale that the material is probed.

In the context of the present invention, a gel is defined as a material that has a dominant elastic response upon probing the material on timescales of $(2\pi)^{-1}$ seconds (0.16 s) or lower, being at a temperature of 5 °C for at least 24 hours. Preferably, G' > G" for $t < (2\pi)^{-1}$ s at T = 5 °C for 24 h; and wherein G" is at least 0.1 Pa. Thus the ratio of the elastic modulus G' to the viscous modulus G" (G':G") is greater than 1 for a gel. It is preferred, however, that said ratio G':G" is greater than 3, more preferably it is greater than 5. Typically, the ratio G':G" is higher than 1 and lower than 1000.

Detailed information about testing conditions is given in the paragraph describing the rheological protocol herein below.

It is also preferred that such gelled food concentrate has a relatively low tendency to syneresis (water separation) and is preferably an elastic, not too rigid or brittle gel (as such will facilitate removal from its packaging; elastic and not too rigid or brittle can best be judged by hand-feel).

In the present invention, preferably, the semi-solid food concentrate has a G' value of between 1 and 50000 Pa. Preferably, G' is lower than 20000 Pa, more preferably lower than 10000 Pa, even more preferably lower than 8000 Pa, even more preferably lower than 6000 Pa, even more preferably lower than 4000 Pa, even more preferably lower than 3500 Pa, even more preferably lower than 3000 Pa. G' is preferably higher than 5, more preferably higher than 10 Pa, even more preferably higher than 50 Pa.

The absolute value of the viscous modulus G" is preferably higher than 0.1 Pa, more preferably higher than 1 Pa, even more preferably, higher than 5 Pa.

Rheological data may be recorded in a standard lab rheometer, for example in an Anton Paar Physica MCR301 rheometer, or one of similar specifications and sensitivity. The samples are measured using a temperature controlled Couette geometry, also known as a cup-and-bob geometry, wherein the material properties are measured between two concentric cylinders of slightly different diameter.

More specifically, we used a serrated cup (C-CC17/T200/SS/P) of 18.085 mm diameter and a serrated bob of (CC17/P6) of 16.66 mm diameter. Hence the gap width is 0.713 mm.

The skilled person knows how to correctly operate the rheometer to obtain reliable rheological data. Data is obtained applying the following process:

- The gel is molten in the oven at 70 °C, which should take no more than 1 hour.
- The liquid is then transferred hot into the pre-heated (70 °C) cup of the Couette geometry.
- After correctly loading the sample and lowering the bob to the measuring position, the liquid is covered with a layer of mineral oil to minimize the effect of evaporation.
- Subsequently, the temperature of the sample is brought down to 5 °C with a rate of 2.5 °C/min, and the sample is subsequently kept at this temperature for 24 hours.
- During the lowering of the temperature and the 24 hours afterwards, the sample is probed for its visco-elastic properties by oscillating the bob with a frequency of 1 rad/s at a strain of 1%.

It is checked that a strain of 1% is in the linear visco-elastic regime at the applied frequency for the material under study.

Also it is desired that the gelled food concentrate is not too sticky (as such gelled food concentrate is likely to be handled by fingers and to allow easy removal from the packaging).

Preferably, the gelled food concentrate has a certain strength or firmness: preferably the strength should be such that the force (in gram) necessary for a plunger to penetrate 10 mm in a gelled food concentrate is typically above 2 g, preferably above 5 g, more preferably above 10 g.

Moreover, low to no phase separation is desired.

The firmness or gel strength may be measured using a texture analyser from Microstable Systems, model TA XT2, operating a 30 kg load cell, to measure the firmer gels, or a 500g load cell, to measure the weaker gels. A plunger is mounted with the following characteristics:

- diameter 0.5 inches, corresponding to 12.7 mm
- height 35 mm
- flat bottom and wall surface, sharp edges, plastics material

For optimal reproducibility, the sample should always be measured in the same type of container, i.e. the container should always be of the same dimensions, to minimize potential wall effects. In this analysis, plastic (PP) containers are used with the following dimensions:

- bottom diameter: 4.9 cm
- top diameter: 5.2 cm
- height of the container: 6.3 cm

The applied filling height is 5 cm.

Measurements are done 1 week after preparation of the samples which are stored at room temperature (20°C) for samples that form gels within this week. For samples which need longer than one week to set like two phase gels, the measurements are carried out after 4 weeks of storage at 20°C. The TA-parameter measurement settings are:

- Pre test speed: 1 mm/s
- Test speed: 0.5 mm/s
- Return speed: 10 mm/s
- Target distance: 15 mm
- Trigger force (auto): 0.5 g (only with 30 kg load cell)

Data recording is stopped at target. The shown force values (in grams) are taken from the recorded graph at 10 mm penetration depth. In case of using the 500 g load cell the automated trigger force is switched off. The value of the firmness at 10 mm penetration depth is then manually obtained from the generated data.

Gels in the context of the present invention are preferably shape stable at room temperature, but need not be necessarily, because very weak and non shape stable food gels indeed exist and consumers are familiar with such weak gels. For example, when producing a 'stock' from scratch. Such a traditional stock will gel in the fridge, but not necessarily to the extent that this stock is shape stable when the stock pot is turned upside-down, certainly not when this is done at room temperature. Gelatine structured gels in high salt conditions may be weak gels. Some gelling systems form phase separated two-phase gel systems, with one layer of gel on top of another. Although consumers do not necessarily dislike two-phase gel systems, they are not preferred in the scope of the present invention for reasons of aesthetics and uneven distribution of taste and colour ingredients over the two phases.

The extent of gelling of such traditional stocks also depends on storage time. Time is an important parameter in gelling processes in general, and more specifically when working with natural gelling agents or biopolymers. It is known in the art that biopolymer networks keep developing over long times, known in the art as 'aging'.

Temperature and time can be interchangeable parameters. This is for example applied in shelf-life tests where samples are stored at elevated temperatures to mimic longer shelf life processes. With respect to biopolymer gelation this can, at least in part, be applied the other way around. By lowering the storage temperature one can mimic gelation behaviour over longer storage times. In addition, this effect can also be used by carrying out the rheological measurement at 5°C instead of at 20°C.

Generally this type of food concentrate gels requires a maturation time ranging a few hours to several days, or even weeks. From the perspective of convenience, it is preferred that the gels according to the invention reach the desired shape stability after not more than 1 month. The above indicated rheological measurement method (at said reduced temperature of 5°C) is suitable for determining whether a composition will meet the desired shape stability after approximately 1 month at room temperature (20°C).

Salt

The food concentrate according to the present invention is preferably a savoury concentrate product that may be used as to prepare for example a bouillon, a soup, a sauce, gravy or a seasoned dish. Generally, such a product is diluted, for example in water, or in a dish, for example in a liquid dish or in a sauce or in a vegetable dish or a rice dish, to obtain a food product which is ready for consumption. Inherently, the concentrated food composition according to the invention comprises a high salt content, to allow the conventional relatively high dilution factors, while maintaining a proper taste impact, but also to support microbiological stability of the concentrate over shelf-life.

To this end, the food concentrate according to the invention preferably comprises salt. Salt preferably comprises common salt also referred to as table salt and NaCl. In addition, part of the salt may comprise KCl or any low sodium mineral salt. Preferably at least 50 wt%, more preferably at least 80 wt% of the salt comprises NaCl, even more preferably the salt comprises more than 90 wt% of NaCl. Salt is preferably NaCl.

The gelled food concentrate comprises salt preferably in an amount of from 19% to 23% by weight, preferably from 19% to less than 22.5% by weight, more preferably 21 % to less than 22.5% by weight based on the total water content of the concentrated food composition.

The total amount of salt is calculated as standard in the art, and is according to the following formula:

$$((\text{weight of salt}) / (\text{weight of salt} + \text{weight of total water content})) *100.$$

For example 5 g salt in 20 g total water content results in an amount of salt of 20 wt% on total water content. When preparing the food concentrate of the invention, this amount of salt may be added during preparation. The same formula is used, mutatis mutandis for calculating other ingredients the amount of which is described as based on the total water content, such as for example gelatine.

The water activity $a_w$ of the total concentrate is preferably between 0.5 and 0.98; more preferably $a_w$ is higher than 0.5, more preferably more than 0.6, even more preferably more than 0.65, even more preferably more than 0.7 and preferably less than 0.98, more preferably less than 0.95, still more preferably less than 0.9, even more preferably less than 0.85, most preferably less than 0.80.

It is noted that high salt levels typically hamper the gelling ability of gelatine; it is the presence of specific types of amino acids that surprisingly counteracts the salt sensitivity of the gelling agent. Not all amino acids have this function. Other amino acids not part of this invention may have no effect, or have a reverse effect (i.e. hamper gel formation by gelatine at high salt). Those amino acids are not preferred.

Gelatine

Gelatine is a well known biopolymer generally perceived as an authentic cooking ingredient, known and appreciated by cooks around the world. It is an inherent ingredient of authentic bouillon cooked from scratch by cooking from animal carcasses and skin. Gelatine is known to have a low melting temperature, a fast and easy melting profile in application and it does not give much re-jellification in a consumer dish.

Two commercially available variants of gelatine exist: type A gelatine and type B gelatine. Gelatine is referred to as type A gelatine when the gelatine is obtained from the raw material via acid extraction. Gelatine is referred to as type B gelatine when the gelatine is obtained from the raw materials via alkaline extraction. The present invention applies only to type A gelatine. Pig skin is the most popular source of type A gelatine. However, also other sources of type A gelatine exist, such as pig bones, beef hides, beef bones or fish.

The gelatine that is suitable for use in the present invention is type A gelatine, preferably of pork origin.

It is preferred that the gelatine has a bloom strength between 50 and 350, more preferably between 100 and 350, still more preferably between 100 and 300, even more preferably between 150 and 300, even more preferably between 200 and 300, where the gelatine may also consist of a mixture of gelatines with different bloom strengths. When using a mixture, the average bloom strength is calculated as:

$\langle B \rangle = \sum(x_i * B_i)$; wherein $x_i$ is the fraction of a gelatine of a certain bloom strength in the composition, and $B_i$ is the bloom strength of that fraction. The sum of all fractions $x_i$ in a gelatine composition is 1. For example a mixture of 3 types of gelatines having 20% of bloom strength 100, 40% of bloom strength 200 and 40% of bloom strength 250, would have an average bloom strength $\langle B \rangle$ = 0.2*100+0.4*200+0.4*250 = 20+80+100 = 200.

Depending on the formulation of the concentrated food product, a certain bloom value could be preferred to achieve better product properties. The bloom strength of the gelatine may have an influence on the viscosity during processing, on the final gel structure and stability of the food concentrate, and on the dissolution properties.

It is known in the art (Handbook of Hydrocolloids) that a relationship exists between gel strength, the bloom value of gelatine and the concentration of gelatine. In general meaning that the lower the bloom value, the more one would need of it to obtain a gel of certain strength. This relationship in general also holds in our invention,

The general convention to switch between gelatines of different bloom value, keeping the gel strength equal, is given by:

$$C_1 \cdot \sqrt{B_1} = C_2 \cdot \sqrt{B_2}$$

Where $C_1$ is the concentration of gelatine 1 and $B_1$ is the bloom value of gelatine 1, $C_2$ is the concentration of gelatine 2 and $B_2$ is the bloom value of gelatine 2.

Thus, to relate the actually used amount of gelatine to an amount of gelatine of bloom strength 250 the formula below is applied:

$$[GE] = \frac{[gelatine] \cdot \sqrt{B_2}}{\sqrt{250}}$$

Therefore the "effective amount of gelatine" [gelatine] for the purpose of the present invention is defined to have a value for [GE] in the formula above of between 3.5-15%. $B_2$ is the (average) bloom strength of the gelatine as used in the food concentrate.

[Gelatine] is the (total) concentration of the gelatine in the food concentrate in percent by weight based on water.

Amino acid

The food concentrate according to the present invention comprises 0.4% to 9% by weight of amino acids, or derivatives, based on water, the amino acids or their derivatives, being selected from the following two groups:

1) Amino Acids: histadine, arginine, iso-leucine and/or valine
2) Derivatives of amino acids: creatine and/or carnosine,

or combinations thereof, wherein the weight of one, or any combination of the mentioned amino acids or direct derivatives adds up to 0.4% to 9% by weight based on water, dissolved in water; more preferably at least 0.7%, still more preferably at least 1%, even more preferably at least 2% by weight based on water.

Thus the total concentration of amino acids and derivatives dissolved in water in the concentrate is defined as [AA-total] = [arginine] + [histidine] + 0.5*[creatine] + [carnosine] + 0.5*[valine] + 0.5*[iso-leucine]. Where the weight concentration of the given compounds is based on the amount dissolved in water.

For obtaining a suitable gel, the combined value for [GE] and [AA-total] is more than or equal to 6 and preferably at most 24 which corresponds to the sum of the respective maximum values.

Taste imparting ingredients

The composition may further comprise taste imparting ingredients and colourants.

The concentrate of the present invention preferably comprises taste imparting components, such as flavours, yeast extracts, herbs and spices, vegetables, meat, fish, meat extracts, and/or flavour enhancer like monosodium glutamate, nucleotides and organic acids. It may further comprise colourants. Taste imparting components and colourants may be added in powdery form, for example, vegetable powder and yeast extract, but also as liquid or pasty extracts. Taste imparting ingredients and colourants are preferably present in an amount of from 0.1 to 60 wt%, more preferably at least 1%, still more preferably at least 2%, even more preferably at least 5% or even at least 10% by weight of taste imparting components, but typically not more than 45%, more preferably not more than 30% still more preferably not more than 25 wt% or even not more than 20 wt% based on total weight of the concentrate.

It may be preferred that the food concentrate of the present invention comprises microbiological active ingredients, such as preservatives or acids. Preservatives or acids may be for example lactic acid, citric acid, potassium sorbate or benzoate.

The food concentrate according to the invention may further comprise fillers as conventionally used in the field.

**Product**

The weight of the concentrate in the form of a gel according to the present invention is preferably more than 2 g, preferably more than 5 g, even more preferably more than 10 g, most preferably higher than 15 g and preferably less than 10 kg, more preferably less than 1 kg, even more preferably less than 500 g, even more preferably less than 300 g, even more preferably less than 100 g, most preferably less than 50 g. Concentrates with a size of from 2 g to 300 g, preferably of from 10 g to 100 g, most preferably of from 15 g to 50 g are in particular suitable for, but not limited to, unit dosing and are preferably designed for single use.

The concentrate may also be a multi-dosing format, although the format is not limited to this. In this case the consumer can dissolve only part of the concentrate of the invention in an appropriate amount of liquid, by for example using a spoon or other suitable utensil. In case of a multi-dose format, the weight of the concentrate is preferably from 50 g to 1 kg, more preferably from 100 g to 700 g.

The concentrate according to the invention is preferably a bouillon, seasoning, soup, sauce, gravy, or meal maker concentrate. Dish specific seasonings are also contemplated.

pH

The pH of the concentrate is typically within the range common in food applications, which is between 4 and 9, more preferably between 5 and 8. For the current invention, the texture, firmness and elasticity of the gelled food concentrate can be influenced by the pH value of the gelled food concentrate. It is up to the skilled person to optimize the pH to obtain the gelled food concentrate having the optimal combination of properties as desired by the purpose of the product. Depending on the concentration, pH adjustment may be required to dissolve the amino acid, or derivative, for example with arginine, which may not dissolve in water completely without bringing the pH down to the preferred range.

**Optional ingredients**

The composition of the packaged savoury food concentrate according to the invention may further comprise an additional binding agent, which purpose is to give improved texture in end application. With texture in end application is preferably meant a certain viscosity needed for specific applications like cooking soups, instant soups, or sauces.

This binding agent is selected from non-gelatinized starches or salt-sensitive texturing agents like gellan, alginate, iota-carrageenan, kappa-carrageenan, lamda-carrageenan, agar or mixtures of thereof, preferably gellan or alginate or mixtures of thereof, whereby preferably gellan is present in an amount of from 0.2 and 2.0 wt% and preferably alginate in an amount of between 1 and 8 wt%, preferably between 2 and 6 wt%, based on the weight of the gelled food concentrate.

If non-gelatinized starch is used as a binding agent, the starch does not give viscosity upon processing. Non-gelatinized starch starts to gelatinize and gives some viscosity to the dish as soon as the concentrate is diluted and heated to a certain temperature, as required for specific application.

In case of salt-sensitive texturing agents, they show texture enhancing behaviour in an aqueous solution with low salt concentration, like it is the case in the final application.

With texture enhancing behaviour is meant that when the salt sensitive gum dissolved in an aqueous solution, it is able to give a gel-like texture to the final solution or to thicken the aqueous solution. At a salt concentration above a critical concentration like in the food concentrate as such, the salt-sensitive gum is not able to form a gel or to provide thickening, at least not to the extent observed in the absence of salt. This is especially preferred for fast dissolving gels, such as gelatine based gels, that release the binding agent quickly into the solution.

Additionally the composition may comprise oil and/or fat, which is optionally emulsified for a creamy appearance or taste perception.

**Process for preparing the gel**

Gelatine is easy to process and does not require complex processing equipment. It allows flexibility in process design. This is partially due to the low melting temperature, which also requires low processing energy and allows for filling at lower temperatures.

The invention further provides a process for preparing a packaged gelled food concentrate, comprising the steps of:

a) preparing a mixture comprising:

- water,
- gelatine
- premix of dry ingredients except salt,

b) stirring the mixture to homogenize under heating to 40-80 °C until the gelatine is dissolved,
c) adding salt to the mixture, under continued stirring,
d) allow setting of the mixture.

In a preferred embodiment, the mixture of step c is filled into a container prior to step d.

In a preferred embodiment, the gelatine is pre-swollen or hydrated in water before adding it to the mixture. More preferably the pre-swelling of the gelatine may be done together with the amino acids. In a more preferred embodiment, the gelatine is pre-swollen in an aqueous solution containing the amino acids before adding it to the mixture; this is preferably included in the scope of the present invention. The water used in pre-swelling is taken from the total water of the composition.

Preferably the mixture of step c is pasteurised before step d. Ideally the pasteurisation is done at a temperature of not more than 85 °C, more preferably between 60-80 °C. Any conventional type of pasteurization is contemplated, including HTST (high temperature short time).

The composition may optionally comprise oil or fat. In case oil of fat is added to the composition it is melted prior to addition. It may be added at any step, but it is preferred that oil or fat are only added after step b, most preferably between steps b and c.

The heating of step b is to dissolve of the gelatine at a temperature of between 50 and 80 °C, preferably not more than 75 °C or even not more than 70 °C; but typically at least 50 °C or even at least 55 °C.

Gelatine is known in the art to be a slow gelling agent. Depending on the gelatine concentration, bloom strength, temperature and other internal or external factors, it may take hours to days to even weeks for the gel to form. In general the higher the temperature the longer it takes for the gelatine gel to form, and vice versa.

It is preferred that the mixture is stirred to homogenisation in each of the steps.

**Examples**

The invention will now be illustrated by means of the following non-limiting examples.

Example 1, comparing different amino acids.

In this example different amino acids and amino acid derivatives were compared on their ability to prevent gelatine solutions in high salt to phase separate and enable gel formation by gelatine as single gelling agent.

The experiment was performed using pork gelatine (ex Gelita, type A, 250 Bloom) at a concentration of 4.5% by weight based on water and a fixed salt concentration of 22% by weight based on water.

The amino acid was dissolved in water, before adding this premix solution to the dry gelatine. The gelatine absorbed the premix, after which the mixture was heated to 75 °C to completely dissolve the gelatine. If necessary, water was added to the total mixture to compensate for water loss by evaporation. The results are shown in table 1.

Premix solutions of amino acids that influence the solution pH considerably, such as arginine, were adjusted to a pH between 5 and 8 by addition of 1 M HCl, before adding the premix to the dry gelatine.

Table 1:

| Amino acid or derivative | [Amino acid] wt% on water | [Gelatine] wt% on water | [Salt] wt% on water | Physical appearance | Comparative/ invention |
|---|---|---|---|---|---|
| BLANK | 0 | 4.5 | 22 | phase separated | Comparative |
| Leucine | 2 | 4.5 | 22 | Liquid + undissolved leucine | Comparative |
| L-Isoleucine (Sigma Aldrich) | 2 | 4.5 | 22 | Gel | Invention |
| Proline | 2 | 4.5 | 22 | Phase separated | Comparative |
| L-Arginine (Merck) | 2 | 4.5 | 22 | Gel | Invention |
| L-Histidine (Sigma Aldrich) | 2 | 4.5 | 22 | Gel | Invention |
| L-Valine (Sigma Adrich) | 2 | 4.5 | 22 | Gel | Invention |
| Creatine (Fluka) | 2 | 4.5 | 22 | Gel | Invention |
| Creatinine (Sigma Aldrich) | 2 | 4.5 | 22 | Liquid | Comparative |
| L-Methionine (Sigma Aldrich) | 2 | 4.5 | 22 | Phase separated | Comparative |
| L-Carnosine (Sigma Aldrich) | 2 | 4.5 | 22 | Gel | Invention |
| Carnithine | 2 | 4.5 | 22 | Phase separated | Comparative |

From this experiment we conclude that, under the tested conditions, the amino acids histidine, arginine, valine, and iso-leucine are able to prevent phase separation of the gelatine solution and enable gelation by gelatine as single gelling agent, as do creatine and carnosine, compounds directly derived from amino acids.

Example 2, comparing gelatines of different bloom strength

In this experiment we compare gelatines of different bloom strength. As can be seen in the definition of [GE], bloom strength and effective concentration are related. In this experiment the amino acid used to aid gel formation is L-histidine.
Samples were prepared using pork type A gelatines of different bloom strengths (all from Gelita) at a fixed salt concentration of 22% by weight based on water. The samples indicated with 'Mix' were a 1:1:1 mix of bloom strengths 300, 160 and 100, such that the total amount of gelatine in the samples was 9 wt% based on water. To calculate [GE] we used the average bloom strength of this mixture, which is:

$$(3*300 + 3*160 + 3*100) / 9 = 187. \text{ Hence:}$$

$$[GE] = \frac{9 \cdot \sqrt{187}}{\sqrt{250}} = 7.8$$

Processing of materials to obtain a gel is similar as described in example 1. Results are shown in table 2.

Table 2:

| Gelatine Bloom | Gelatine wt% (aq) | Histadine wt% (aq) | Physical appearance | [GE] | [GE] + [AA-total] ≥ 6 ? | Comparative/ invention |
|---|---|---|---|---|---|---|
| 300 | 9 | 0 | phase separated | 9.9 | Yes | Comparative |
| 300 | 9 | 5 | gel | 9.9 | Yes | Invention |
| 250 | 9 | 0 | Phase separated | 9 | Yes | Comparative |
| 250 | 9 | 5 | Gel | 9 | Yes | Invention |
| 160 | 9 | 0 | Phase separated | 7.2 | Yes | Comparative |
| 160 | 9 | 5 | Gel | 7.2 | Yes | Invention |
| 100 | 9 | 0 | Phase separated | 5.7 | Yes | Comparative |
| 100 | 9 | 5 | Gel | 5.7 | Yes | Invention |
| Mix (187) | 9 | 0 | Phase separated | 7.8 | Yes | Comparative |
| Mix (187) | 9 | 5 | Gel | 7.8 | Yes | Invention |

The results show that it is possible to obtain gels at a salt concentration that would otherwise lead to a phase separated state, using type A gelatines of different bloom strengths and L-histidine as gelling aid. Also mixes of gelatines of different bloom strengths lead to gels.

Example 3, showing the active concentration range of arginine.

This example shows the concentration range over which the amino acid arginine aids in the prevention of a gelatine solution to phase separate at high salt concentrations and facilitates gel formation using gelatine as single gelling agent.
The samples were prepared using L-arginine (ex Merck) and type A gelatine from pork, 250 bloom (ex Gelita). Samples were prepared as described in example 1, with the special notion that the premix solution was brought to pH 5-8, such that all the arginine present was fully dissolved in the premix, before adding the premix to the dry gelatine. The results are shown in table 3.

Table 3:

| [Gelatine] wt% (aq) | [Salt] wt% (aq) | [Arginine] wt% (aq) | [GE] wt% (aq) | [GE]+[AA-total] ≥ 6 ? | Physical appearance |
|---|---|---|---|---|---|
| 4.5 | 22 | 1 | 4.5 | No | Phase separated |
| 4.5 | 22 | 2 | 4.5 | Yes | Gel |
| 4.5 | 25 | 2 | 4.5 | Yes | Phase separated |
| 4.5 | 22 | 5 | 4.5 | Yes | Gel |
| 9 | 22 | 0.1 | 9 | Yes | Phase separated |
| 9 | 22 | 0.6 | 9 | Yes | Gel |
| 9 | 22 | 1 | 9 | Yes | Gel |
| 9 | 25 | 1 | 9 | Yes | Phase separated |
| 9 | 22 | 2 | 9 | Yes | Gel |
| 9 | 22 | 5 | 9 | Yes | Gel |
| 9 | 22 | 9 | 9 | Yes | Gel |

From this example we conclude that arginine is capable of preventing a gelatine solution in high salt conditions to phase separate and enable gelation by gelatine as single gelling agent.

Example 4, showing the active concentration range of histidine.

This example shows the concentration range over which the amino acid histidine aids in the prevention of a gelatine solution to phase separate at high salt concentrations and facilitates gel formation using gelatine as single gelling agent.

Process to prepare the samples was similar as described in example 1, using pork gelatine, type A, 250 bloom (ex Gelita). L-histidine was obtained from Sigma Aldrich. Rheological properties were measured according to the protocol described above. The results are shown in table 4.

Table 4:

| [Gelatine] wt% (aq) | [Salt] wt%(aq) | [Histadine] wt% (aq) | [GE] wt%(aq) | [GE] + [AA-total] ≥ 6 ? | Physical appearance | G' / G" |
|---|---|---|---|---|---|---|
| 4.5 | 22 | 0.3 | 4.5 | No | Phase separated | - |
| 4.5 | 22 | 1 | 4.5 | No | Phase separated | - |
| 4.5 | 22 | 2 | 4.5 | Yes | Gel | 205 / 4 = 51 |
| 4.5 | 22 | 5 | 4.5 | Yes | Gel | 220 / 7 =31 |
| 4.5 | 25 | 5 | 4.5 | Yes | Phase separated | - |
| 9 | 22 | 0.6 | 9 | Yes | Gel | 2922 / 72=41 |
| 9 | 22 | 1 | 9 | Yes | Gel | 1073 / 35 = 31 |
| 9 | 22 | 2 | 9 | Yes | Gel | 1178 / 26 = 45 |
| 9 | 25 | 2 | 9 | Yes | Phase separated | - |

From this example we conclude that histidine is capable of preventing a gelatine solution in high salt conditions to phase separate and enable gelation by gelatine as single gelling agent.

Example 5: showing the active concentration range of creatine:

This example shows the concentration range over which the amino acid derivative creatine aids in the prevention of a gelatine solution to phase separate at high salt concentrations and facilitates gel formation using gelatine as single gelling agent.

Process to prepare the samples was similar as described in example 1, using pork gelatine, type A, 250 bloom (ex Gelita). Creatine was obtained from Fluka. The rheological properties were measured according to the protocol described above. As defined above, the concentration of creatine counts only half in the value for [AA-total]. The results are shown in table 5.

Table 5:

| [Gelatine] wt% (aq) | [Salt] wt%(aq) | [Creatine] wt% (aq) | [GE] wt% (aq) | [AA-total] Wt% (aq) | [GE] + [AA-total] ≥ 6 ? | Physical appearance | G' / G" |
|---|---|---|---|---|---|---|---|
| 4.5 | 22 | 1 | 4.5 | 0.5 | No | Phase separated | - |
| 9 | 22 | 0.3 | 9 | 0.15 | Yes | Phase separated | - |
| 9 | 22 | 0.6 | 9 | 0.3 | Yes | Phase separated | - |

(continued)

| [Gelatine] wt% (aq) | [Salt] wt%(aq) | [Creatine] wt% (aq) | [GE] wt% (aq) | [AA-total] Wt% (aq) | [GE] + [AA-total] ≥ 6 ? | Physical appearance | G' / G" |
|---|---|---|---|---|---|---|---|
| 9 | 22 | 1 | 9 | 0.5 | Yes | Gel | 813 / 28 = 29 |
| 9 | 25 | 1 | 9 | 0.5 | Yes | Phase separated | - |
| 9 | 22 | 2 | 9 | 1 | Yes | Gel | 1386 / 26 = 53 |

From this example we conclude that creatine is capable of preventing a gelatine solution in high salt conditions to phase separate and enable gelation by gelatine as single gelling agent.

Example 6, combining different amino acids:

This example shows that it is possible to combine different amino acids, and still get the desired effect. Process to prepare the samples was similar as described in example 1, using pork gelatine, type A, 250 bloom (ex Gelita). The L-isoleucine was obtained from Sigma Aldrich. Results are shown in table 6.

Table 6:

| | [AA-total] wt% (aq) | [GE] wt% (aq) | [GE] + [AA-total] ≥ 6 ? | Physical appearance |
|---|---|---|---|---|
| Arginine + isoleucine (1:1) | 3.75 | 4.5 | Yes | Gel |
| Arginine + Histidine (1:1) | 5 | 4.5 | Yes | Gel |
| Arginine + Histidine + isoleucine (1: 1:1) | 3.13 | 4.5 | Yes | Gel |

From this example we conclude that mixes of the selected amino acids are capable of preventing a gelatine solution in high salt conditions to phase separate, and enable gelation by gelatine as single gelling agent.

Example 7, example of a concentrated vegetable bouillon:

In this example we compare two concentrated vegetable bouillon formulations, one without added histidine (example 7A) and one with added histidine (example 7B). The structuring agent is gelatine, type A, 250 bloom, in a concentration of 9.0 wt% based on water, and the NaCl concentration is 22.0 wt% based on water in both samples. Example 7B shows that it is possible to obtain a gelled food concentrate, which can be used as a concentrated bouillon. The ingredients are shown in tables 7A and 7B.

Table 7A: Ingredient list of concentrated vegetable bouillon without added amino acid

| Ingredient as such | wt% | wt% salt | wt% dry matter |
|---|---|---|---|
| Sugar | 4.3 | 0 | 100 |
| Herbs & spices | 0.4 | 0 | 100 |
| Yeast extract | 3.4 | 18 | 100 |
| Carrot juice | 1.8 | 1.1 | 76 |
| Leek juice | 2.0 | 0.4 | 68 |
| Celery juice | 2.7 | 1.4 | 78 |

(continued)

| Ingredient as such | wt% | wt% salt | wt% dry matter |
|---|---|---|---|
| Onion juice | 7.7 | 0.5 | 69 |
| Water | 55.1 | 0 | 0 |
| Salt | 16.2 | 100 | 100 |
| Gelatine, pork, Type A, 250 bloom | 6.6 | 0 | 89 |
| **Total wt% in sample 7A** | **100.0** | **16.9** | **40.1** |

Table 7A indicates in the first column the name of the ingredient used, in the second column the weight percent based on total weight of the ingredient used as such, not taking into account impurities, the third column indicates the weight percent of the ingredient that is salt and the fourth column indicates the percentage by weight of dry material of the ingredient.

From table 7A one can derive that the salt concentration in sample 7A equals 22.0 wt% based on water and that the pure gelatine concentration in sample 7A equals 9.0 wt% based on water. The blank recipe 7A contains 0.1 % by weight based on water of total amino acid [AA-total], from the yeast extract and the vegetable juices. This is outside the scope of the present invention. The sample prepared according to table 7A contains histidine, but in a very low amount, 0.0078% by weight based on water.

The sample based on recipe 7A was prepared by pre-soaking the gelatine in water for 5 minutes after which all the other ingredients were added one by one. This mixture was heated to 75 °C, to fully dissolve the gelatine. After the gelatine was dissolved, the salt was added to the mix, while stirring slowly and keeping the mix at 75 °C. After the salt was dissolved, additional water was added to compensate for the water lost by evaporation. The mixture was then poured into the sample container and left at room temperature.

After filling into the sample container, sample 7A was stored at room temperature.

Sample 7A was evaluated one week after production. Sample 7A appeared to be a two-phase system, of which the bottom phase appeared to be much darker in colour and a strong gel, while the top phase was a liquid, much lighter in colour than the bottom phase. It was not possible to evacuate sample 7A from the sample container in one piece.

Sample 7B was prepared according to the ingredients in table 7B, which is exactly the same formulation as sample 7A, but now with histidine added to the ingredients. This slightly changes the weight percentages based on total weight of all the ingredients.

Table 7B: Ingredient list of concentrated vegetable bouillon with added histidine

| Ingredient as such | wt% | wt% salt | wt% dry matter |
|---|---|---|---|
| Sugar | 4.1 | 0 | 100 |
| Herbs & spices | 0.4 | 0 | 100 |
| Yeast extract | 3.3 | 18 | 100 |
| Carrot juice | 1.7 | 1.1 | 76 |
| Leek juice | 1.9 | 0.4 | 68 |
| Celery juice | 2.6 | 1.4 | 78 |
| Onion juice | 7.5 | 0.5 | 69 |
| Water | 53.5 | 0 | 0 |
| Salt | 15.7 | 100 | 100 |
| Gelatine, pork, Type A, 250 bloom | 6.4 | 0 | 89 |
| Histidine | 3.0 | 0 | 100 |
| **Total wt% in sample 7B** | **100.0** | **16.4** | **41.9** |

From the data in table 7B one can derive that the salt concentration in sample 7B equals 22.0 wt% based on water, that the pure gelatine concentration in sample 7B equals 9.0 wt% based on water and that the added histidine concentration in sample 7B equals 4.9 wt% based on water.

Sample 7B was prepared similar to sample 7A, adding the histidine together with all the other ingredients, except the salt.

The sample was also stored at room temperature before inspecting the sample one week after production.

After one week, sample 7B could be retrieved from the sample container in one piece, was shape stable and had the appearance of a single phase glossy gel. The firmness of the gel was 15 g, as measured according to the described protocol. The gel dissolved quickly in boiling water, that is within 1 minute. The water activity of the gel was measured to be 0.78. The moduli G' and G" were measured according to the described protocol, which resulted in the following values:

| G' *Pa* | G" *Pa* | Ratio G' : G" |
|---|---|---|
| 2582 | 143 | 18 |

From example 7 it is concluded that it is possible to prepare a gelled food concentrate to be used as a concentrated vegetable bouillon, with a commercially relevant formulation, based on gelatine alone as the structure giving ingredient in combination with histidine as gelling aid, at a salt concentration that would otherwise not lead to a gelled food concentrate within a weeks' time. From example 7 it becomes clear that the added histidine prevents the phase separation into a gel phase and a liquid phase that occurred in sample 7A, besides aiding in the gel formation of sample 7B.

## Claims

1.  A gelled food concentrate comprising:

    a 20-80wt% water by weight of the total food concentrate;
    b An effective amount of gelatine wherein the amount of gelatine is effective when the value for [GE] in the formula below is in the range of 3.5 - 15% by weight on water, where [GE] is defined as:

    $$[GE] = \frac{[gelatine] \cdot \sqrt{B_2}}{\sqrt{250}},$$

    wherein [gelatine] is the concentration of gelatine in the food concentrate by weight based on water and $B_2$ is the bloom strength of the gelatine in the food concentrate;
    c 19wt% to 23wt% salt by weight of the total water content of the food concentrate; and
    d 0.4wt% to 9wt% by weight of the total water content of the food concentrate of total amino acids [AA-total], defined as amino acids or derivatives or combinations thereof, dissolved in water, wherein the total amino acid concentration [AA-total] is defined as [AA-total] = [arginine] + [histidine] + ½*[valine] + ½*[isoleucine] + ½*[creatine] + [carnosine]; and wherein the combined value for [GE] and [AA-total] is more than or equal to 6; and wherein the gelatine is type A gelatine, preferably of pork origin.

2.  A food concentrate according to claim 1, wherein the ratio of the elastic modulus G' to the viscous modulus G" (G':G") is greater than 1, measured for $t < (2\pi)^{-1}$ s at T = 5 °C for 24 h, wherein G" is at least 0.1 Pa.

3.  A food concentrate according to anyone of the preceeding claims, wherein the total of amino acids [AA-total] is at least 2wt% by weight of the total water content of the food concentrate.

4.  A concentrate according to any one of the preceding claims wherein further comprising 0.1-60 wt% taste imparting ingredients and/or colourants.

5.  A concentrate according to any one of the preceding claims wherein the water activity ($a_w$) is between 0.5 and 0.98.

6.  A concentrate according to anyone of the preceding claims, wherein the food concentrate is a bouillon, seasoning, soup, sauce, gravy, or meal maker concentrate.

7.  Process for preparing a packaged gelled food concentrate according to anyone of claims 1 to 6, comprising the steps of:

    a) preparing a mixture comprising:

- water,
- gelatine, and
- premix of dry ingredients except salt,

b) stirring the mixture to homogenize under heating to 40-80°C until the gelatine is dissolved,
c) adding salt to the mixture, under continued stirring,
d) allow setting of the mixture.

**8.** A process according to claim 7, wherein the mixture of step c is filled into a container prior to step d.

**9.** A process according to claim 7 or 8, wherein the gelatine is pre-swollen in water before adding it to the mixture.

**10.** A process according to any one of claim 7 to 9, wherein the mixture of step c is pasteurised before step d.

**11.** Use of the gelled food concentrate according to any one of claims 1 to 6, in the preparation of a bouillon, a soup, a sauce, gravy or a seasoned dish.

**Patentansprüche**

**1.** Geliertes Lebensmittelkonzentrat, umfassend:

a) 20-80 Gew.-% Wasser, bezogen auf das Gewicht des gesamten Lebensmittelkonzentrats;
b) eine effektive Menge an Gelatine, wobei die Menge an Gelatine effektiv ist, wenn der Wert für [GE] in der unteren Formel in dem Bereich von 3,5 - 15%, bezogen auf das Gewicht des Wassers, liegt, wobei [GE] definiert

$$[GE] = \frac{[Gelatine] \cdot \sqrt{B2}}{\sqrt{250}} ,$$

ist als: wobei [Gelatine] die Konzentration an Gelatine in dem Lebensmittelkonzentrat, bezogen auf das Gewicht des Wassers, ist und $B_2$ die Bloom-Festigkeit der Gelatine in dem Lebensmittelkonzentrat ist;
c) 19 Gew.-% bis 23 Gew.-% Salz, bezogen auf das Gewicht des gesamten Wassergehalts des Lebensmittelkonzentrats; und
d) 0,4 Gew.-% bis 9 Gew.-%, bezogen auf das Gewicht des gesamten Wassergehalts des Lebensmittelkonzentrats, an gesamten Aminosäuren [AA-gesamt], definiert als Aminosäuren oder Derivate oder Kombinationen davon, gelöst in Wasser, wobei die Konzentration an gesamten Aminosäuren [AA-gesamt] definiert ist als

$$[AA\text{-gesamt}] = [Arginin] + [Histidin] + \frac{1}{2}$$

$$* [Valin] + \frac{1}{2} * [Isoleucin] + \frac{1}{2} * [Kreatin] + [Carnosin];$$

und wobei der kombinierte Wert für [GE] und [AA-gesamt] größer oder gleich 6 ist; und wobei die Gelatine Typ A Gelatine ist, vorzugsweise vom Schwein.

**2.** Lebensmittelkonzentrat nach Anspruch 1, wobei das Verhältnis des Elastizitätsmoduls G' zu dem Viskositätsmodul G" (G':G") größer als 1 ist, gemessen für t < $(2\pi)^{-1}$ s bei T = 5 °C für 24 h, wobei G" mindestens 0,1 Pa ist.

**3.** Lebensmittelkonzentrat nach irgendeinem der vorherigen Ansprüche, wobei das Gesamte an Aminosäuren [AA-gesamt] mindestens 2 Gew.-%, bezogen auf das Gewicht des gesamten Wassergehalts des Lebensmittelkonzentrats, ausmacht.

**4.** Konzentrat nach irgendeinem der vorherigen Ansprüche, ferner umfassend 0,1-60 Gew.-% geschmacksverleihende Zutaten und/oder Farbmittel.

**5.** Konzentrat nach irgendeinem der vorherigen Ansprüche, wobei die Wasseraktivität ($a_w$) zwischen 0,5 und 0,98 ist.

**6.** Konzentrat nach irgendeinem der vorherigen Ansprüche, wobei das Lebensmittelkonzentrat eine Bouillon, ein Würzmittel, eine Suppe, eine Sauce, ein Bratensaft oder ein Mahlzeitzubereiterkonzentrat ist.

**7.** Verfahren zur Herstellung eines verpackten, gelierten Lebensmittelkonzentrats nach irgendeinem der Ansprüche 1 bis 6, umfassend die Schritte:

    a) Herstellen einer Mischung, umfassend:

        - Wasser,
        - Gelatine und
        - Vormischung trockener Zutaten, außer Salz,

    b) Rühren der Mischung zum Homogenisieren unter Erwärmen auf 40-80°C, bis die Gelatine gelöst ist,
    c) unter anhaltendem Rühren Zugeben von Salz zu der Mischung,
    d) Erlauben des Abbindens der Mischung.

**8.** Verfahren nach Anspruch 7, wobei die Mischung von Schritt c) vor Schritt d) in ein Behältnis gefüllt wird.

**9.** Verfahren nach Anspruch 7 oder 8, wobei die Gelatine in Wasser vorgequollen wird, bevor sie der Mischung zugegeben wird.

**10.** Verfahren nach irgendeinem der Ansprüche 7 bis 9, wobei die Mischung von Schritt c) vor Schritt d) pasteurisiert wird.

**11.** Verwendung des gelierten Lebensmittelkonzentrats nach irgendeinem der Ansprüche 1 bis 6 in der Herstellung einer Bouillon, einer Suppe, einer Sauce, eines Bratensafts oder eines gewürzten Gerichts.

**Revendications**

**1.** Concentré alimentaire gélifié comprenant :

    a) 20-80 % en masse d'eau en masse du concentré alimentaire total ;
    b) une quantité efficace de gélatine où la quantité de gélatine est efficace lorsque la valeur pour [GE] dans la formule ci-dessous se trouve dans l'intervalle de 3,5-15 % en masse par rapport à l'eau, où [GE] est définie

par : $$[GE] = \frac{[gélatine].\sqrt{B_2}}{\sqrt{250}},$$ où [gélatine] est la concentration de gélatine dans le concentré alimentaire en masse sur la base de l'eau et $B_2$ est la résistance bloom de la gélatine dans le concentré alimentaire ;

    c) 19 % en masse à 23 % en masse de sel en masse de la teneur totale en eau du concentré alimentaire ; et
    d) 0,4 % en masse à 9 % en masse en masse de la teneur totale en eau du concentré alimentaire de tous les acides aminés [AA-total], définis par des acides aminés ou dérivés ou combinaisons de ceux-ci, dissous dans de l'eau, où la concentration totale en acides aminés [AA-total] est définie par [AA-total] = [arginine] + [histidine] + ½*[valine] + ½*[isoleucine] + ½*[créatine] + [carnosine] ; et où la valeur combinée de [GE] et [AA-total] est supérieure ou égale à 6 ; et où la gélatine est de la gélatine de type A, de préférence provenant du porc.

**2.** Concentré alimentaire selon la revendication 1, où le rapport du module élastique G' au module visqueux G'' (G':G'') est supérieur à 1, mesuré pour $t<(2\pi)^{-1}$s à T = 5°C pendant 24 h, où G'' est d'au moins 0,1 Pa.

**3.** Concentré alimentaire selon l'une quelconque des revendications précédentes, où le total d'acides aminés [AA-total] est d'au moins 2 % en masse en masse de la teneur totale en eau du concentré alimentaire.

**4.** Concentré selon l'une quelconque des revendications précédentes où il comprend de plus 0,1-60 % en masse d'ingrédients communiquant du goût et/ou de colorants.

**5.** Concentré selon l'une quelconque des revendications précédentes, où l'activité d'eau ($a_w$) est de 0,5 à 0,98.

**6.** Concentré selon l'une quelconque des revendications précédentes, où le concentré alimentaire est un bouillon, un assaisonnement, une soupe, une sauce, un jus de viande, ou un concentré pour fabricant de repas.

**7.** Procédé de préparation d'un concentré alimentaire gélifié emballé selon l'une quelconque des revendications 1 à 6, comprenant les étapes de :

a) préparation d'un mélange comprenant :

- de l'eau,
- de la gélatine, et
- un pré-mélange d'ingrédients secs à l'exception du sel,

b) agitation du mélange pour homogénéiser en chauffant à 40-80°C jusqu'à ce que la gélatine soit dissoute,
c) addition du sel au mélange, sous agitation continue,
d) laisser prendre le mélange.

8.  Procédé selon la revendication 7, où le mélange de l'étape c est introduit dans un récipient avant l'étape d.

9.  Procédé selon la revendication 7 ou 8, où la gélatine est pré-gonflée dans de l'eau avant son addition au mélange.

10. Procédé selon l'une quelconque des revendications 7 à 9, où le mélange de l'étape c est pasteurisé avant l'étape d.

11. Utilisation du concentré alimentaire gélifié selon l'une quelconque des revendications 1 à 6, dans la préparation d'un bouillon, d'une soupe, d'une sauce, d'un jus de viande ou d'un plat assaisonné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012136454 A
- US 2013280405 A
- WO 2007068483 A
- WO 2007068402 A
- WO 2007068484 A
- EP 2468110 A
- WO 2012062919 A
- US 2012276271 A
- US 5780090 A
- WO 2012097930 A
- WO 02089608 A

**Non-patent literature cited in the description**

- **THOMAS MEZGER.** Das Rheologie Handbuch. Curt R. Vincentz-Verlag, 2000